# EUROPEAN PATENT APPLICATION

(11) **EP 4 848 195 A1**
(43) Date of publication of application: **02.12.2026**
(21) Application number: 25816902.8
(22) Date of filing: 31.03.2025
(51) Int. Cl.: G06T 1/20

(54) **GRAPHICS PROCESSING UNIT, LOAD BALANCING METHOD, AND ELECTRONIC DEVICE**

(71) Applicant: VeriSilicon Technology (Shanghai) Co., Ltd., Shanghai 201306 (CN); VeriSilicon Microelectronics (Shanghai) Co., Ltd., Shanghai 201203 (CN)
(72) Inventor: LUO, Jinwei, Shanghai 201306 (CN); JIANG, Fulong, Shanghai 201203 (CN); ZHANG, Qin, Shanghai 201203 (CN); LU, Rong, Shanghai 201203 (CN); ZHANG, Huiming, Shanghai 201203 (CN)
(74) Representative: Ponti & Partners, S.L.P
(86) International application number: PCT/CN2025/086361
(87) International publication number: WO 2026/207718

(57) **Abstract**

The present invention provides a graphics processing unit, a load balancing method, and an electronic device. The graphics processing unit includes: a plurality of graphics processing clusters, each graphics processing cluster including a plurality of minimum-level parallel processing units; and a first balancing manager configured to record a first workload of each of the graphics processing clusters, and assign, in a case where a current work task is received, the current work task to each of the graphics processing clusters based on the first workload of each of the graphics processing clusters; each of the graphics processing clusters includes a second balancing manager, and the second balancing manager is configured to record a second workload of each of the plurality of minimum-level parallel processing units in the graphics processing cluster where it is located, and receive the current work task and reassign the current work task to each of the minimum-level parallel processing units based on the second workload of each of the minimum-level parallel processing units. The graphics processing unit can assign work tasks in a balanced manner.

## Description

### Technical field

The present invention relates to the field of processors, and specifically provides a graphics processing unit, a load balancing method, and an electronic device.

### Background art

A GPU (Graphics Processing Unit) includes a plurality of parallel processing units, and a balanced distribution of different work tasks to different parallel processing units facilitates full utilization of the performance of the graphics processing unit. A prior GPU is equipped with a work task balancing distributor, by which work tasks are distributed to individual parallel processing units for execution.

The work task balancing distributor needs to both record the workload of each parallel processing unit and distribute tasks according to the workload, and receive feedback data from the parallel processing units after completion of the work tasks and update the workload. However, due to the limited performance of the work task balancing distributor, in the case where the GPU has a large number of work tasks, the performance of the work task balancing distributor may not be able to meet the requirements for distribution of work tasks and processing of feedback data. As a result, an untimely and unbalanced distribution of work tasks occurs, so that the GPU has low processing efficiency, and the performance of the GPU cannot be fully utilized.

### Summary

In view of this, the present invention aims to provide a graphics processing unit, a load balancing method, and an electronic device to improve the balance in distribution of work tasks and improve the data processing performance of parallel processing units of the graphics processing unit.

In a first aspect, an embodiment of the present invention provides a graphics processing unit, including: a plurality of graphics processing clusters, each graphics processing cluster including a plurality of minimum-level parallel processing units, the minimum-level parallel processing unit including a plurality of target processing cores, the target processing cores including at least one of shading processing cores and computational processing cores, and each of the target processing cores being configured to execute a work task assigned thereto; and a first balancing manager configured to record a first workload of each of the graphics processing clusters, and assign, in a case where a current work task is received, the current work task to each of the graphics processing clusters based on the first workload of each of the graphics processing clusters, wherein each of the graphics processing clusters includes a second balancing manager, and the second balancing manager is configured to record a second workload of each of the plurality of minimum-level parallel processing units in the graphics processing cluster where the second balancing manager is located, and receive the current work task and reassign the current work task to each of the minimum-level parallel processing units based on the second workload of each of the minimum-level parallel processing units, so that a target processing core of each of the minimum-level parallel processing units executes the current work task.

The target processing cores of the graphics processing unit are controlled by parallel processing units, and one parallel processing unit can control a plurality of target processing cores. In an embodiment of the present invention, the parallel processing units are further divided, and the plurality of parallel processing units in the graphics processing unit are divided into at least two levels, one level consists of GPU clusters (processing clusters of the graphics processing unit), and the other level consists of minimum-level parallel processing units included in each processing cluster of the graphics processing unit, and the minimum-level parallel processing units control the target processing cores. Meanwhile, two-level balancing managers are arranged for the two levels of parallel processing units, respectively, the first balancing manager is responsible for recording the first workloads of different graphics processing clusters and distribute tasks thereto, and the second balancing manager is responsible for recording the second workload of each minimum-level parallel processing unit and distribute tasks thereto. When there is a work task, the work task is first distributed to each graphics processing cluster by the first balancing manager, and then distributed by the second balancing manager in the graphics processing cluster to a minimum-level parallel processing unit for execution. Compared with the work task balancing distributor in the prior art which is responsible for recording workloads of all parallel processing units and assigning tasks thereto, a mode in which there are a plurality of multi-level balancing managers (including the first balancing manager and the second balancing manager) allows reduction in work amount required by each balancing manager for recording of workloads and assignment of work tasks, so that each balancing manager can distribute work tasks in time, so as to improve the balance in the distribution of work tasks and make full use of different parallel processing units, thereby improving the parallel data processing performance of the graphics processing unit.

In one embodiment, the graphics processing cluster includes a third parallel processing unit; the third parallel processing unit includes at least two minimum-level parallel processing units; each of the graphics processing clusters includes a plurality of second balancing managers, each of the second balancing managers is arranged in respective third parallel processing unit, and the second balancing manager is configured to record the second workload of each of the plurality of minimum-level parallel processing units, to which work tasks are assigned, in the third parallel processing unit where the second balancing manager is located; and each of the graphics processing clusters further includes a third balancing manager; and the third balancing manager is configured to record a third workload of each of the plurality of third parallel processing units in the graphics processing cluster where the third balancing manager is located, and receive the current work task and reassign the current work task to each of the third parallel processing units based on the third workload of each of the third parallel processing units.

The minimum-level parallel processing unit includes a plurality of target processing cores. The workload includes the working statuses of the target processing cores. When there are a larger number of minimum-level parallel processing units in each graphics processing cluster, each of the second balancing managers needs to be responsible for recording the working statuses of more target processing cores. In an embodiment of the present invention, the parallel processing units are divided into further levels, the minimum-level parallel processing units are arranged in a third parallel processing unit, each parallel processing unit is configured with a corresponding second balancing manager, and a third balancing manager is further arranged in each graphics processing cluster to perform recording of workloads and assignment of work tasks for all the third parallel processing units, so that the number of parallel processing units to be managed by each balancing manager is reduced, the work amount of each balancing manager is reduced, and the timeliness of task assignment is improved, whereby the work tasks can be assigned in a more balanced manner.

In one embodiment, the graphics processing cluster includes a plurality of fourth parallel processing units; each of the fourth parallel processing units includes at least two third parallel processing units; each of the graphics processing clusters includes a plurality of third balancing managers, and each of the third balancing managers is arranged in respective fourth parallel processing unit; and each of the graphics processing clusters further includes a fourth balancing manager; and the fourth balancing manager is configured to record a fourth workload of each of the plurality of fourth parallel processing units in the graphics processing cluster where the fourth balancing manager is located, and receive the current work task and reassign the work task to each of the third parallel processing units based on the fourth workload of each of the fourth parallel processing units.

In an embodiment of the present invention, the parallel processing units in the graphics processing unit are divided into four levels to achieve a balanced distribution of work tasks to the four-level parallel processing units, different balancing managers are responsible for the multi-level parallel processing units and record workloads and perform task distribution at respective levels, respectively, and the respective balancing managers work at different levels simultaneously, which effectively improves the balance in the assignment of work tasks, and improves the parallel data processing performance of the graphics processing unit.

In one embodiment, the target processing core includes a plurality of registers, and the target processing core executes an assigned work task based on the registers; the first workload, the second workload, the third workload, and the fourth workload include a quantity of registers to which the work tasks are assigned, respectively, wherein for any of the minimum-level parallel processing units, after the registers of the target processing core of this minimum-level parallel processing unit complete execution of the assigned work task, this minimum-level parallel processing unit feeds back, to the second balancing manager, a first register quantity for which the work task is completed; for each of the third parallel processing units, the second balancing manager of this parallel processing unit receives the first register quantities fed back from all the minimum-level parallel processing units in this parallel processing unit and counts them as a second register quantity, updates the second workload based on the second register quantity, and feeds back the second register quantity to the third balancing manager of the fourth parallel processing unit where this third parallel processing unit is located; for any of the fourth parallel processing units, the third balancing manager of this fourth parallel processing unit receives the second register quantities fed back from all the third parallel processing units in this fourth parallel processing unit and counts them as a third register quantity, updates the third workload based on the third register quantity, and feeds back the third register quantity to the fourth balancing manager of the graphics processing cluster where this fourth parallel processing unit is located; for any of the graphics processing clusters, the fourth balancing manager in this graphics processing cluster receives the third register quantities fed back from all the fourth parallel processing units in this graphics processing cluster and counts them as a fourth register quantity, updates the fourth workload based on the fourth register quantity, and feeds back the fourth register quantity to the first balancing manager; and the first balancing manager is configured to update the first workload based on the fourth register quantities fed back from all the graphics processing clusters.

When a work task is assigned to the minimum-level parallel processing unit and to be executed by the target processing core, corresponding registers are configured. After the work task is completed, the registers assigned to the work task are released so that the registers can be assigned to a new work task. In an embodiment of the present invention, the balancing manager at each level feeds back to a higher level level-by-level, the low-level balancing managers record registers that have completed tasks, and then the higher-level balancing manager does not need to count the number of registers in the minimum-level parallel processing units one by one. On the one hand, the amount of data fed back upwards is reduced, and on the other hand, the difficulty in processing of data by the higher-level balancing manager is reduced. Thus, the register quantity for which tasks are completed can be counted as data with improved efficiency, and work tasks can be assigned timely to parallel processing units with low load, whereby the balance in the assignment of work tasks can be improved. In addition, the number of low-level balancing managers is the largest, and a plurality of low-level balancing managers can efficiently record registers that have completed tasks, thus the register quantity for which tasks are completed can be counted with improved efficiency, and the timeliness and balance of task assignment can be improved.

In one embodiment, the first balancing manager is configured to: determine a graphics processing cluster with the lowest load based on the first workload of each of the graphics processing clusters, and assign the current work task to the graphics processing cluster with the lowest load; and the second balancing manager is configured to: determine a minimum-level parallel processing unit with the lowest load based on the second workload of each of the minimum-level parallel processing units in the graphics processing cluster where the second balancing manager is located, and assign the current work task to the minimum-level parallel processing unit with the lowest load.

In an embodiment of the present invention, a unit with the lowest load (including a graphics processing cluster and a minimum-level parallel processing unit) is determined, and the work task is assigned to the unit with the lowest load for execution, so that the load is advantageously more balanced, and the performance of the graphics processing unit is fully utilized.

In one embodiment, the first balancing manager is further configured to: predict, based on the current work task and a preset work task execution logic, a derived work task to be generated based on the current work task; determine a graphics processing cluster with the lowest load based on the first workload; pre-assign the graphics processing cluster with the lowest load for execution of the derived work task; and update the first workload based on a pre-assignment result of the derived work task.

There is a certain correlation between work tasks. A new work task may be derived from a preceding work task. There is a certain delay in the assignment of work tasks. When a derived work task is assigned after it is generated, the assignment of the derived work task may not be timely. Therefore, in an embodiment of the present invention, it is possible to predict a derived work task that may be generated from the current work task, and pre-assign a graphics processing cluster to the derived work task in advance, so as to reduce a delay in the assignment of the derived work task. In addition, the first workload is updated after the derived work task is pre-assigned, so that the future workload of the graphics processing cluster can be known in advance during assignment of other work tasks, thereby reducing the occurrence of high load due to execution of the derived work task and improving the balance in the assignment of work tasks.

In one embodiment, the first balancing manager is further configured to: predict, based on the current work task and a preset work task execution logic, a derived work task to be generated based on the current work task; calculate a target resource amount required for execution of the derived work task; determine a target graphics processing cluster with the largest remaining resource amount based on the first workload of each of the graphics processing clusters; and pre-assign the target graphics processing cluster for execution of the derived work task and update the target graphics processing cluster and update the first workload.

In one embodiment of the present invention, the derived work task is pre-assigned based on the resource amount, whereby an unbalanced assignment of work tasks due to the difference in performance between different parallel processing units can be reduced during the assignment of work tasks, and the balance in the assignment of work tasks can be improved.

In one embodiment, the current work task includes a plurality of subtasks, and the target resource amount includes a register quantity required for execution of the derived work task, or a subtask quantity of the derived work task.

In a second aspect, an embodiment of the present invention provides a load balancing method for a graphics processing unit, applied to a graphics processing unit, the graphics processing unit including a first balancing manager and a plurality of graphics processing clusters, each graphics processing cluster including a plurality of minimum-level parallel processing units, the minimum-level parallel processing unit including a plurality of target processing cores, the target processing cores including at least one of shading processing cores and computational processing cores, wherein the load balancing method includes steps of: receiving a current work task; obtaining a first workload of each of the graphics processing clusters by the first balancing manager; assigning the current work task to a target graphics processing cluster based on the first workload by the first balancing manager; obtaining a second workload of each of the plurality of minimum-level parallel processing units in the target graphics processing cluster by a target second balancing manager of the target graphics processing cluster, in a case where the target graphics processing cluster receives the current work task; and reassigning the current work task to a target minimum-level parallel processing unit based on the second workload by the target second balancing manager, so that a target processing core of the target minimum-level parallel processing unit executes the current work task.

In one embodiment, the graphics processing cluster includes a third parallel processing unit; the third parallel processing unit includes at least two minimum-level parallel processing units; each of the graphics processing clusters includes a plurality of second balancing managers, each of the second balancing managers is arranged respective third parallel processing unit, and the second balancing manager is configured to record the second workload of each of the plurality of minimum-level parallel processing units in the third parallel processing unit where the second balancing manager is located; and each of the graphics processing clusters further includes a third balancing manager; the third balancing manager is configured to record a third workload of each of the plurality of third parallel processing units in the graphics processing cluster where the third balancing manager is located, wherein the step of obtaining a second workload of each of the plurality of minimum-level parallel processing units in the target graphics processing cluster by a target second balancing manager of the target graphics processing cluster includes steps of: obtaining a third workload of each of the third parallel processing units in the target graphics processing cluster by a target third balancing manager in the target graphics processing cluster; assigning the current work task to a target third parallel processing unit based on the third workload by the target third balancing manager; and obtaining the second workload of each of the plurality of minimum-level parallel processing units in the target graphics processing cluster based on the target second balancing manager in the target third parallel processing unit.

In one embodiment, the graphics processing cluster includes a plurality of fourth parallel processing units; each of the fourth parallel processing units includes at least two third parallel processing units; each of the graphics processing clusters includes a plurality of third balancing managers, and each of the third balancing managers is arranged in each of the fourth parallel processing units, respectively;
each of the graphics processing clusters further includes a fourth balancing manager; the fourth balancing manager is configured to record a fourth workload of each of the plurality of fourth parallel processing units in the graphics processing cluster where the fourth balancing manager is located, wherein the step of obtaining a third workload of each of the third parallel processing units in the target graphics processing cluster by a target third balancing manager in the target graphics processing cluster includes steps of: obtaining a fourth workload of each of the fourth parallel processing units in the target graphics processing cluster by a target fourth balancing manager in the target graphics processing cluster; assigning the current work task to a target fourth parallel processing unit based on the fourth workload by the target fourth balancing manager; and obtaining the third workload based on a target third balancing manager in the target fourth parallel processing unit.

In one embodiment, the target processing core includes a plurality of registers, and the target processing core executes an assigned work task based on the registers; and the first workload, the second workload, the third workload, and the fourth workload include a quantity of registers to which the work tasks are assigned, respectively, wherein the method further includes: after the registers of the target processing core of any of the minimum-level parallel processing units complete execution of the assigned work task, the minimum-level parallel processing unit feeding back, to a target superior second balancing manager, a first register quantity for which the work task is completed; the target superior second balancing manager receiving the first register quantities fed back from all the minimum-level parallel processing units and counting them as a second register quantity; the target superior second balancing manager updating the second workload based on the second register quantity; and the target superior second balancing manager feeding back the second register quantity to a target superior third balancing manager; the target superior third balancing manager receiving the second register quantities from all the target superior second balancing managers and counting them as a third register quantity; causing the target superior third balancing manager to update the third workload based on the third register quantity; the target superior third balancing manager feeding back the third register quantity to a target superior fourth balancing manager; the target superior fourth balancing manager receiving the third register quantities from all the target superior third balancing managers and counting them as a fourth register quantity; the target superior fourth balancing manager updating the fourth workload based on the fourth register quantity; the fourth balancing manager feeding back the fourth register quantity to the first balancing manager; and the first balancing manager updating the first workload based on the fourth register quantities fed back from all the fourth balancing managers.

In one embodiment, the step of assigning the current work task to a target graphics processing cluster based on the first workload by the first balancing manager includes: the target first balancing manager determining a graphics processing cluster with the lowest load based on the first workload of each of the graphics processing clusters; and assigning the current work task to the graphics processing cluster with the lowest load; and the step of reassigning the current work task to a target minimum-level parallel processing unit based on the second workload by the target second balancing manager includes: the target second balancing manager determining a minimum-level parallel processing unit with the lowest load based on the second workload of each of the minimum-level parallel processing units in the graphics processing cluster where the target second balancing manager is located, and assigning the current work task to the minimum-level parallel processing unit with the lowest load.

In one embodiment, after reception of the current work task, the method further includes: the first balancing manager predicting, based on the current work task and a preset work task execution logic, a derived work task to be generated based on the current work task; determining a graphics processing cluster with the lowest load based on the first workload; pre-assigning the graphics processing cluster with the lowest load for execution of the derived work task; and updating the first workload according to a pre-assignment result of the derived work task.

In one embodiment, after the reception of the current work task, the method further includes: the first balancing manager predicting, based on the current work task and a preset work task execution logic, a derived work task to be generated based on the current work task; calculating a target resource amount required for execution of the derived work task; determining a target graphics processing cluster with the largest remaining resource amount based on the first workload of each of the graphics processing clusters; and pre-assigning the target graphics processing cluster for execution of the derived work task and updating the target graphics processing cluster and updating the first workload.

In one embodiment, the current work task includes a plurality of subtasks, and the target resource amount include a register quantity required for execution of the derived work task, or a subtask quantity of the derived work task.

In a third aspect, an embodiment of the present invention provides an electronic device including a graphics processing unit as described in any embodiment of the first aspect.

### Brief description of drawings

In order to more clearly illustrate the technical solutions of embodiments of the present invention, drawings required to be used in the embodiments of the present invention will be described briefly below. It is understood that the drawings below are merely illustrative of some embodiments of the present invention and thus should not be considered as limiting its scope. It will be appreciated by those of ordinary skill in the art that other relevant drawings can be obtained according to these drawings without any inventive effort.
FIG. 1 is a first schematic structural diagram of a graphics processing unit according to one embodiment of the present invention;
FIG. 2 is a hierarchical schematic diagram of a parallel processing unit according to one embodiment of the present invention;
FIG. 3 is a second schematic structural diagram of a graphics processing unit according to one embodiment of the present invention;
FIG. 4 is a third schematic structural diagram of a graphics processing unit according to one embodiment of the present invention;
FIG. 5 is a flow chart of a load balancing method for a graphics processing unit according to one embodiment of the present invention.

Reference numerals: graphics processing unit 100; graphics processing cluster 110; first balancing manager 121; second balancing manager 122; third balancing manager 123; fourth balancing manager 124; minimum-level parallel processing unit 130; third parallel processing unit 140; fourth parallel processing unit 150.

### Detailed description of the embodiments

The present invention will be described below in further detail with reference to the drawings and embodiments in order to further clarify the objects, technical solutions, and advantages of the embodiments of the present invention. It should be understood that the specific embodiments described herein are only intended to explain the present invention and are not intended to limit the present invention.

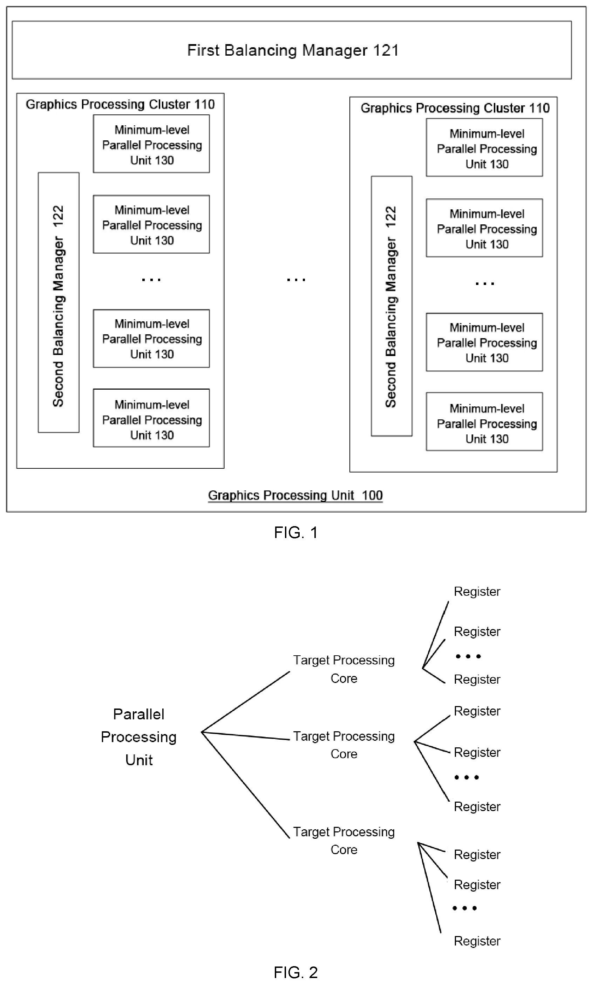

Referring to FIG. 1, FIG. 1 is a first schematic structural diagram of a graphics processing unit 100 according to one embodiment of the present invention. The graphics processing unit 100 includes: a graphics processing cluster 110 and a first balancing manager 121.

The graphics processing unit 100 includes a plurality of parallel processing units, such as hundreds or thousands of parallel processing units. Referring to FIG. 2, FIG. 2 is a hierarchic schematic diagram of a parallel processing unit according to one embodiment of the present invention. In the parallel processing unit, each parallel processing unit includes a plurality of target processing cores. In the present invention, the target processing cores include shader cores (shading processing cores) and computational processing cores, some or all of the target processing cores in the parallel processing unit are divided into a batch, and a batch of target processing cores are jointly used to complete a task. Here, each target processing core is configured with a plurality of temporary registers, and the target processing core executes an assigned work task through the plurality of registers.

In an embodiment of the present invention, the parallel processing units are divided into different levels. For instance, the parallel processing units are firstly divided into a plurality of graphics processing clusters 110, and each graphics processing cluster 110 includes a plurality of parallel processing units. For example, a graphics processing unit 100 includes 64 parallel processing units, which may be divided into four graphics processing clusters 110, and each graphics processing cluster 110 includes 16 parallel processing units.

In an embodiment of the present invention, there may be multiple graphics processing clusters 110, and all parallel processing units of the graphics processing unit 100 may be comprised in the graphics processing clusters 110. The parallel processing units in each graphics processing cluster 110 may be further subdivided. Following the above example, each graphics processing cluster 110 includes 16 parallel processing units, the 16 parallel processing units may be further divided into four groups of secondary parallel processing units, and each group of secondary parallel processing units includes four parallel processing units. In this way, the parallel processing units that are not further divided are minimum-level parallel processing units 130 described in the embodiment of the present invention. Correspondingly, the graphics processing cluster 110 may also be understood as a maximum-level graphics processing unit 100.

As shown in FIG. 1, in one embodiment of the present invention, the parallel processing units may be divided into at least two levels, one level consists of graphics processing clusters 110, the other level consists of minimum-level parallel processing units 130, and each graphics processing cluster 110 includes a plurality of minimum-level parallel processing units 130.

The distribution and recording of work tasks are managed by a corresponding manager. In an embodiment of the present invention, a first balancing manager 121 may be arranged for all the graphics processing clusters 110, and the first balancing manager 121 is configured to record a first workload of each graphics processing cluster 110, and to assign a current work task to each graphics processing cluster 110 based on the first workload of each graphics processing cluster 110 in the case where the current work task is received. Here, the first workload may be recorded as a workload table.

A prior LBM (load balance manager) may be used as the balancing manager. In this embodiment, the first balancing manager 121 is responsible for recording the workloads of all the graphics processing clusters 110 and obtaining the first workload corresponding to each graphics processing cluster 110, wherein the first workload is the workload of each graphics processing cluster 110, and the term "first" does not have other limiting meanings. Correspondingly, the first load balancer records the workloads of the graphics processing clusters 110 and assigns tasks thereto, and the first load balancer may also be called a CLBM (Cluster LBM, cluster load balancing manager).

The first workload includes, but is not limited to, the usage status and idle status of resources, such as the status of assignment of work tasks to all minimum-level parallel processing units 130 in the graphics processing cluster 110, and the number of idle minimum-level parallel processing units 130, and further, the first workload may also be recorded as the usage status and idle status of the target processing cores or registers in the graphics processing cluster 110, which is not limited herein.

In an embodiment of the present invention, a second balancing manager 122 is further arranged in each graphics processing cluster 110, and the second balancing manager 122 is configured to record a second workload of each of the plurality of minimum-level parallel processing units 130 in the graphics processing cluster 110 where it is located, and further configured to assign work tasks.

In an embodiment of the present invention, the structure of the second balancing manager 122 may be the same as the structure of the first balancing manager 121, except that they are arranged in different positions and are responsible for different parallel processing units. The first balancing manager 121, as a maximum-level balancing manager, is responsible for recording workloads and distributing work tasks at the cluster level, while the second balancing manager 122 is arranged in the graphics processing cluster 110 and is responsible for distributing tasks and recording workloads for the individual minimum-level parallel processing unit 130 in the graphics processing cluster 110.

In an embodiment of the present invention, when the graphics processing unit 100 receives a current work task and needs to distribute it, the first balancing manager 121 may assign the current work task to each graphics processing cluster 110, for example to a graphics processing cluster 110 with the lowest load, based on the first workload of each graphics processing cluster 110. When the graphics processing cluster 110 receives the current work task, the second balancing manager 122 in this graphics processing cluster 110 may reassign the current work task to each minimum-level parallel processing unit 130, for example to a minimum-level parallel processing unit 130 with the lowest load, according to the second workload of each minimum-level parallel processing unit 130, so that a target processing core of the minimum-level parallel processing unit 130 executes the current work task.

Correspondingly, when a minimum-level parallel processing unit 130 completes a work task, the second balancing manager 122 releases the minimum-level parallel processing unit 130 assigned to the completed work task, counts the first number of registers in the minimum-level parallel processing unit 130 that have completed the task, updates the second workload based on the first number of registers, and then feeds back, to the first balancing manager 121, the first number of registers that have completed the work task, so that the first balancing manager 121 also updates the first workload. The first balancing manager 121 only needs to know the total quantity of remaining resources of each graphics processing cluster 110, thus the first number of registers may be the total number of registers, of all the minimum-level parallel processing units 130, that have completed tasks. In this way, the work amount required for data processing by the higher-level balancing manager can be reduced. There are a large number of lower-level balancing managers that can work simultaneously, which also facilitates the improvement of the efficiency of data processing. Here, the updating of the first workload and the second workload may be performed by adding, to the corresponding workload, the number of registers that have completed work tasks.

The first balancing manager 121 and the second balancing manager 122 enable recording of workloads at two levels. The second balancing manager 122 only needs to record the second workload of each minimum-level parallel processing unit 130 in the graphics processing cluster 110 where it is located, and sum up and then feed back the second workloads to the first balancing manager 121. The first balancing manager 121 does not need to specifically record the load status of each minimum-level parallel processing unit 130, but only needs to obtain the overall load status of each graphics processing cluster 110 that is counted by the second balancing manager 122. Moreover, the second balancing managers 122 of different graphics processing clusters 110 work simultaneously, which can effectively improve the efficiency of load recording. Thereby, during distribution of work tasks, the first workloads and the second workloads can be obtained in time for the distribution of work tasks, such that the work tasks can be distributed in a balanced manner to the graphics processing clusters 110 and to the minimum-level parallel processing units 130, so that the workloads of the minimum-level parallel processing units 130 are more balanced.

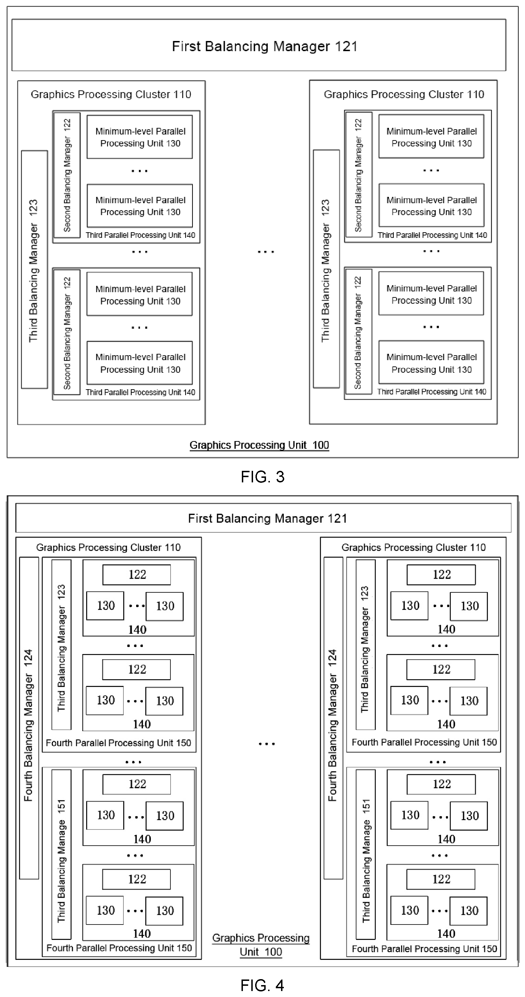

In addition to the two-level structure according to the above embodiment, in an embodiment of the present invention, the parallel processing units of the graphics processing unit 100 may also be divided into a structure having more levels. Referring to FIG. 3, FIG. 3 is a second schematic structural diagram of a graphics processing unit 100 according to one embodiment of the present invention.

In one embodiment of the present invention, the graphics processing cluster 110 may further include a third parallel processing unit 140, and the third parallel processing unit 140 includes at least two minimum-level parallel processing units 130.

Each graphics processing cluster 110 includes a plurality of second balancing managers 122, each of the second balancing managers 122 is arranged in each of the third parallel processing units 140, respectively, and the second balancing manager 122 is configured to record the second workload of each of the plurality of minimum-level parallel processing units 130 in the third parallel processing unit 140 where it is located.

As shown in FIG. 3, in this embodiment, the graphics processing cluster 110 is at a higher level than that of the third parallel processing unit 140, and the third parallel processing unit 140 is at a higher level than that of the minimum-level parallel processing unit 130. For example, in some embodiments of the present invention, the minimum-level parallel processing unit 130 may be an HPPU (Half Parallel Processor unit), and the third parallel processing unit 140 may be a general PPU (Parallel Processor unit).

Correspondingly, since the second balancing managers 122 are incorporated into the third parallel processing units 140, and each of the third parallel processing units 140 also requires recording of workloads and assignment of work tasks, in an embodiment of the present invention, each graphics processing cluster 110 may further include a third balancing manager 123. The third balancing manager 123 is configured to record a third workload of each of the plurality of third parallel processing units 140 in the graphics processing cluster 110 where it is located, and to receive the current work task and reassign the current work task to each of the third parallel processing units 140 based on the third workload of each of the third parallel processing units 140.

Due to further level division, in this embodiment, the number of minimum-level parallel processing units 130 for which the second balancing manager 122 needs to be responsible can be reduced.

Exemplarily, the graphics processing unit 100 has 64 parallel processing units. If being divided into two levels, the 64 parallel processing units are divided into four graphics processing clusters 110, each graphics processing cluster 110 includes 16 minimum-level parallel processing units 130, there is one first balancing manager 121, there are four second balancing managers 122, and each of the second balancing managers 122 needs to be responsible for 16 minimum-level parallel processing units 130.

If it is divided into three levels, the 64 parallel processing units are divided into four graphics processing clusters 110, each graphics processing cluster 110 includes four third parallel processing units 140, there is one first balancing manager 121, there are four third balancing managers 123, there are four second balancing managers, and each of the third parallel processing units 140 includes four minimum-level parallel processing units 130.

By further level division, the number of lower-level balancing managers is correspondingly increased, and the number of parallel processing units for which each lower-level balancing manager needs to be responsible is reduced. Thus, more balancing managers can work in parallel, and the amount of data to be processed by each balancing manager is reduced, which can effectively improve the work efficiency of the balancing managers, thereby enabling each balancing manager to improve timeliness in the recording of workloads of the parallel processing units at the level where it is located and in the assignment of work tasks thereto, thus facilitating improvement of the balance in the assignment of work tasks.

Similarly to the above-mentioned two-level structure, in the three-level structure, when the graphics processing unit 100 receives a current work task and needs to distribute it, the first balancing manager 121 may assign the current work task to each graphics processing cluster 110 based on the first workload of each graphics processing cluster 110. When the graphics processing cluster 110 receives the current work task, the third balancing manager 123 in this graphics processing cluster 110 may reassign the current work task to each of the third parallel processing units 140 according to the third workload of each of the third parallel processing units 140. After receiving the current work task, the second balancing manager 122 in the third parallel processing unit 140 reassigns the current work task to each minimum-level parallel processing unit 130 according to the second workload of each minimum-level parallel processing unit 130 in this third parallel processing unit 140, so that a target processing core of the minimum-level parallel processing unit 130 executes the current work task.

Correspondingly, when the registers of the target processing core of the minimum-level parallel processing unit 130 complete the execution of an assigned work task, the second balancing manager 122 releases the minimum-level parallel processing unit 130 assigned to the completed work task, receives, from the minimum-level parallel processing unit 130, the first number of registers that have completed the task, counts the first numbers of registers from all the minimum-level parallel processing units 130 to obtain a second register number, and updates the second workload based on the second register number, and the second balancing manager 122 then feeds back, to the third balancing manager 123, the second number of registers that have completed the work tasks. The third balancing manager 123 receives the second register numbers fed back from the second balancing managers 122 in all the third parallel processing units 140 in the graphics processing cluster where it is located, and counts them as a third register number. Each of the third balancing managers 123 may update the third workload according to the third register number, and each of the third balancing managers 123 feeds back its respective third register number to the first balancing manager 121. The first balancing manager 121 updates the first workload after receiving all the third register numbers.

Further, an embodiment of the present invention provides a graphics processing unit 100 having a structure with four-level parallel processing units. Referring to FIG. 4, FIG. 4 is a third schematic structural diagram of a graphics processing unit 100 according to one embodiment of the present invention, and the graphics processing unit according to FIG. 4 has a structure with four-level parallel processing units. In the structure with four-level parallel processing units, the graphics processing cluster 110 includes a plurality of fourth parallel processing units 150, and each of the fourth parallel processing units 150 includes at least two third parallel processing units 140. In other words, the third parallel processing units 140 are further divided and configured in the fourth parallel processing units 150.

In this embodiment, the respective parallel processing units are in the order of: a graphics processing cluster 110, a fourth parallel processing unit 150, a third parallel processing unit 140, and a minimum-level parallel processing unit 130, from high to low levels. In an embodiment of the present invention, the fourth parallel processing unit 150 may be a DPPU (Double Parallel Processor unit), the third parallel processing unit 140 may be a PPU, and the minimum-level parallel processing unit 130 may be an HPPU.

Correspondingly, each graphics processing cluster 110 includes a plurality of third balancing managers 123, each of the third balancing managers is arranged in each of the fourth parallel processing units 150, respectively, and meanwhile, each graphics processing cluster 110 further includes a fourth balancing manager 124 to record, by the fourth balancing manager 124, a fourth workload of each of the plurality of fourth parallel processing units 150 in the graphics processing cluster 110 where it is located, and to receive the current work task and reassign the work task to each of the fourth parallel processing units 150 based on the fourth workload of each of the fourth parallel processing units 150.

For a structure with four-level parallel processing units, when the graphics processing unit 100 receives a current work task and needs to distribute it, the first balancing manager 121 may assign the current work task to each graphics processing cluster 110 based on the first workload of each graphics processing cluster 110. When the graphics processing cluster 110 receives the current work task, the fourth balancing manager 124 in this graphics processing cluster 110 assigns the current work task to each fourth parallel processing unit 150 according to the fourth workload. Then, the third balancing manager 123 in the fourth parallel processing unit that receives the current work task assigns the current work task to each third parallel processing unit 140 according to the third workload. After receiving the current work task, the second balancing manager 122 in the third parallel processing unit 140 reassigns the current work task to each minimum-level parallel processing unit 130 according to the second workload of each minimum-level parallel processing unit 130 in this third parallel processing unit 140, so that a target processing core of the minimum-level parallel processing unit 130 executes the current work task.

When the registers of the target processing core complete a work task, the following operations are performed in the graphics processing unit 100.

For any of the minimum-level parallel processing units 130, after the registers of the target processing core of this minimum-level parallel processing unit 130 complete the execution of an assigned work task, this minimum-level parallel processing unit 130 feeds back, to the second balancing manager 122, the first number of registers that have completed the work task.

For each of the third parallel processing units 140, the second balancing manager 122 of this parallel processing unit receives the first number of registers fed back from all the minimum-level parallel processing units 130 in this parallel processing unit and counts them as a second register number, updates the second workload based on the second register number, and feeds back the second register number to the third balancing manager 123 of the fourth parallel processing unit 150 where this third parallel processing unit 140 is located.

For any of the fourth parallel processing units 150, the third balancing manager 123 of this fourth parallel processing unit 150 receives the second register numbers fed back from all the third parallel processing units 140 in this fourth parallel processing unit 150 and counts them as a third register number, updates the third workload based on the third register number, and feeds back the third register number to the fourth balancing manager 124 of the graphics processing cluster 110 where this fourth parallel processing unit 150 is located.

For any of the graphics processing clusters 110, the fourth balancing manager 124 in this graphics processing cluster 110 receives the third register numbers fed back from all the fourth parallel processing units 150 in this graphics processing cluster 110 and counts them as a fourth register number, updates the fourth workload based on the fourth register number, and feeds back the fourth register number to the first balancing manager 121.

Finally, the first balancing manager 121 is configured to update the first workload based on the fourth register numbers fed back from all the graphics processing clusters 110.

In an embodiment of the present invention, the balancing manager at each level feeds back to a higher level level-by-level, the low-level balancing managers record registers that have completed tasks, and then the higher-level balancing manager does not need to count the number of registers in the minimum-level parallel processing units 130 one by one. On the one hand, the amount of data fed back upwards is reduced, and on the other hand, the difficulty in processing of data by the higher-level balancing manager is reduced. Thus, the number of registers that have completed tasks can be counted as data with improved efficiency, and work tasks can be assigned timely to parallel processing units with low load, whereby the balance in the assignment of work tasks can be improved. In addition, the number of low-level balancing managers is the largest, and a plurality of low-level balancing managers can efficiently record registers that have completed tasks, thus the number of registers that have completed tasks can be counted with improved efficiency, and the timeliness and balance of task assignment can be improved.

In the graphics processing unit 100 according to the present invention, the parallel processing units are divided into four levels to achieve a balanced distribution of work tasks to the four-level parallel processing units, different balancing managers are responsible for the multi-level parallel processing units and record workloads and perform task distribution at respective levels, respectively, and the respective balancing managers work at different levels simultaneously, which effectively improves the balance in the assignment of work tasks, and improves the parallel data processing performance of the graphics processing unit 100. It can be understood that when there are a larger number of parallel processing units in the graphics processing unit 100, the hierarchy can be further divided, for example, divided into a five-level structure, a six-level structure, or the like. When divided into two or more levels, each balancing manager in the graphics processing unit 100 has been able to achieve the purpose of improving timeliness in the updating of workloads and in the assignment of work tasks, thereby improving the balance in the assignment of work tasks and improving the parallel data processing performance of the graphics processing unit 100. Therefore, the above description is only an example and should not be deemed as limiting the present invention.

In the above embodiment, during assignment of a work task, the balancing manager at each level may assign the work task to a subordinate parallel processing unit with the lowest load, so as to balance the load status between the individual parallel processing units.

For example, when the graphics processing unit 100 has a four-level structure:
The first balancing manager 121 is configured to determine a graphics processing cluster 110 with the lowest load based on the first workload of each graphics processing cluster 110, and assign the current work task to the graphics processing cluster 110 with the lowest load.

The fourth balancing manager 124 is configured to determine a fourth parallel processing unit 150 with the lowest load based on the fourth workload of each of the fourth parallel processing units 150 in the graphics processing cluster 110 where it is located, and assign the current work task to the fourth parallel processing unit 150 with the lowest load.

The third balancing manager 123 is configured to determine a third parallel processing unit 140 with the lowest load based on the third workload of each of the third parallel processing units 140 in the fourth parallel processing unit 150 where it is located, and assign the current work task to the third parallel processing unit 140 with the lowest load.

The second balancing manager 122 is configured to determine a minimum-level parallel processing unit 130 with the lowest load based on the second workload of each of the minimum-level parallel processing units 130 in the third parallel processing unit 140 where it is located, and assign the current work task to the minimum-level parallel processing unit 130 with the lowest load.

For example, when the graphics processing unit 100 has a two-level structure, the first balancing manager 121 is configured to determine a graphics processing cluster 110 with the lowest load based on the first workload of each graphics processing cluster 110, and assign the current work task to the graphics processing cluster 110 with the lowest load; and the second balancing manager 122 is configured to determine a minimum-level parallel processing unit 130 with the lowest load based on the second workload of each of the minimum-level parallel processing units 130 in the graphics processing cluster 110 where it is located, and assign the current work task to the minimum-level parallel processing unit 130 with the lowest load.

A three-level structure or other hierarchical structures are configured in a similar manner and will not be described in detail herein.

There is a delay in the assignment of work tasks, which affects the timeliness in the updating of workloads and in the assignment of work tasks. And, there is a certain correlation between work tasks. When execution of an original work task is completed, a new work task may be derived. For example, a task for a tessellation control shader will be generated after execution of a task for a vertex shader is completed. Therefore, in an embodiment of the present invention, it is possible to predict a derived work task to be generated, and pre-assign a corresponding parallel processing unit to the derived work task to be generated.

For a lower-level parallel processing unit, it may not have enough registers to execute the derived work task, therefore, in an embodiment of the present invention, the derived work task will be pre-assigned among higher-level parallel processing units, and for example, may be pre-assigned among the graphics processing clusters 110 and the fourth parallel processing units 150.

Taking pre-assignment among the graphics processing clusters 110 as an example, in some embodiments of the present invention, the first balancing manager 121 is further configured to: predict, based on the current work task and preset work task execution logic, a derived work task to be generated based on the current work task; determine a graphics processing cluster 110 with the lowest load based on the first workload; pre-assign the graphics processing cluster 110 with the lowest load for execution of the derived work task; and update the first workload based on the result of the pre-assignment of the derived work task.

In this embodiment, the work task execution logic may be determined according to the correlation between the work tasks, and for example, there is a derived relationship between a task for a vertex shader and a task for a tessellation control shader. The work task execution logic may be different for different types of work and will not be described in detail herein.

After the graphics processing unit 100 receives a current work task, it may predict, from the preset work task execution logic, a derived work task that may be generated by the current work task, and assign a corresponding graphics processing cluster 110 to the derived work task in advance, so that the derived work task can be directly sent to the pre-assigned graphics processing cluster 110 for subsequent assignment and execution after the derived work task is generated.

In an embodiment of the present invention, after the derived work task is pre-assigned, the first workload of the corresponding graphics processing cluster 110 may also be updated, so that a workload to be generated is recorded in the first workload in advance. Thus, during assignment of work tasks, no more work tasks will be assigned to the graphics processing cluster 110 that will have a high load in the future, since the future workload can be known in advance.

In an embodiment of the present invention, after the derived work task is generated, the first workload will not be updated again after the derived work task is generated, because the first workload of the graphics processing cluster 110 has been updated in the pre-assignment phase.

Similarly, if the pre-assignment is performed among the fourth parallel processing units 150, in this embodiment, the fourth balancing manager 124 is further configured to: predict, based on the current work task and preset work task execution logic, a derived work task to be generated based on the current work task; determine a fourth parallel processing unit 150 with the lowest load based on the fourth workload; pre-assign the fourth parallel processing unit 150 with the lowest load for execution of the derived work task; and update the first workload based on the result of the pre-assignment of the derived work task.

A delay in assignment of the derived work task can be reduced by the above pre-assignment, and the first workload is updated after the derived work task is pre-assigned, so that the future workload of the graphics processing cluster 110 can be known in advance during assignment of other work tasks, thereby reducing the occurrence of high load on a parallel processing unit caused by simultaneous assignment of the derived work task and other work tasks to the parallel processing unit, and improving the balance in the assignment of work tasks.

In an embodiment of the present invention, during the pre-assignment, different parallel processing units may be configured with different numbers of target processing cores, so that different parallel processing units have different performance, and even if the work task is assigned to a parallel processing unit with the lowest load, it may still have a high and uneven load.

In one embodiment of the present invention, the first balancing manager 121 is further configured to: predict, based on the current work task and preset work task execution logic, a derived work task to be generated based on the current work task; calculate a target resource quantity required for execution of the derived work task; determine a target graphics processing cluster 110 with the largest quantity of remaining resources based on the first workload of each of the graphics processing clusters 110; and pre-assign the target graphics processing cluster 110 for execution of the derived work task and update the target graphics processing cluster 110 and update the first workload.

In an embodiment of the present invention, the assignment of the derived work task is performed in accordance with the target resource quantity required for the derived work task and the remaining resource quantities of the graphics processing clusters 110, and a balanced assignment of the derived work tasks can be performed based on the parallel processing units in consideration of the difference in performance between different parallel processing units, thereby improving the balanced assigning effect.

In the above embodiment, the resource may be the number of registers, the target resource quantity is the number of registers required, and the remaining resource quantity is the number of idle registers. The resource may also be the number of tasks, the target resource quantity is the number of subtasks in the current work task, and the remaining resource quantity is the number of tasks that can be processed by the parallel processing unit.

Similarly, the pre-assignment in accordance with the resource quantity as described above may be performed on the third balancing manager and the fourth balancing manager 124.

Based on the same inventive concept, an embodiment of the present invention further provides a load balancing method for a graphics processing unit. The load balancing method for a graphics processing unit is applicable to a graphics processing unit according to any of the foregoing embodiments. The graphics processing unit includes a first balancing manager and a plurality of graphics processing clusters, each graphics processing cluster includes a plurality of minimum-level parallel processing units, the minimum-level parallel processing unit includes a plurality of target processing cores, and the target processing cores include at least one of shading processing cores and computational processing cores.

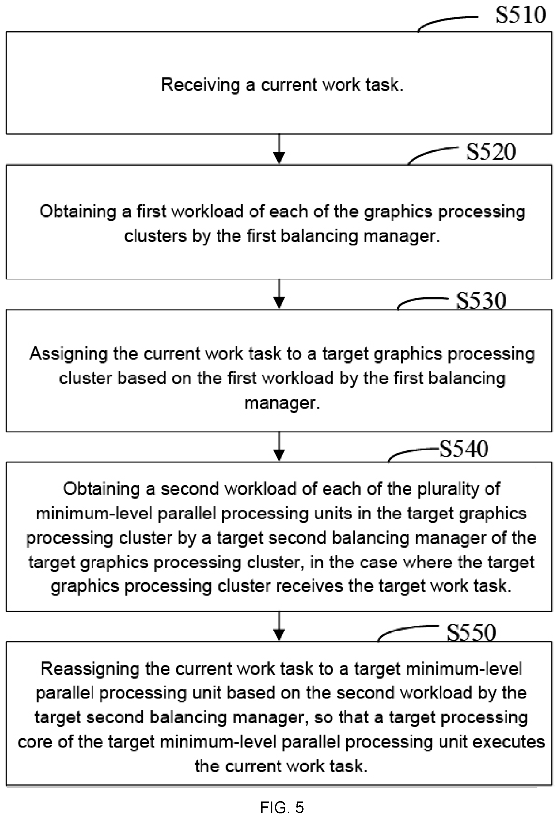

Referring to FIG. 5, FIG. 5 is a flow chart of a load balancing method for a graphics processing unit according to one embodiment of the present invention. The load balancing method for a graphics processing unit includes:
S510 of receiving a current work task;
S520 of obtaining a first workload of each of the graphics processing clusters by the first balancing manager;
S530 of assigning the current work task to a target graphics processing cluster based on the first workload by the first balancing manager;
S540 of obtaining a second workload of each of the plurality of minimum-level parallel processing units in the target graphics processing cluster by a target second balancing manager of the target graphics processing cluster, in the case where the target graphics processing cluster receives the current work task; and
S550 of reassigning the current work task to a target minimum-level parallel processing unit based on the second workload by the target second balancing manager, so that a target processing core of the target minimum-level parallel processing unit executes the current work task.

In one embodiment, the graphics processing cluster includes a third parallel processing unit; the third parallel processing unit includes at least two minimum-level parallel processing units; each of the graphics processing clusters includes a plurality of second balancing managers, each of the second balancing managers is arranged in each of the third parallel processing units, respectively, and the second balancing manager is configured to record the second workload of each of the plurality of minimum-level parallel processing units in the third parallel processing unit where it is located. Each of the graphics processing clusters further includes a third balancing manager; and the third balancing manager is configured to record a third workload of each of the plurality of third parallel processing units in the graphics processing cluster where it is located. The step of obtaining a second workload of each of the plurality of minimum-level parallel processing units in the target graphics processing cluster by a target second balancing manager of the target graphics processing cluster includes: obtaining a third workload of each of the third parallel processing units in the target graphics processing cluster by a target third balancing manager in the target graphics processing cluster; assigning the current work task to a target third parallel processing unit based on the third workload by the target third balancing manager; and obtaining the second workload of each of the plurality of minimum-level parallel processing units in the target graphics processing cluster based on the target second balancing manager in the target third parallel processing unit.

In one embodiment, the graphics processing cluster includes a plurality of fourth parallel processing units; each of the fourth parallel processing units includes at least two third parallel processing units; each of the graphics processing clusters includes a plurality of third balancing managers, and each of the third balancing managers is arranged in each of the fourth parallel processing units, respectively; each of the graphics processing clusters further includes a fourth balancing manager; and the fourth balancing manager is configured to record a fourth workload of each of the plurality of fourth parallel processing units in the graphics processing cluster where it is located. The step of obtaining a third workload of each of the third parallel processing units in the target graphics processing cluster by a target third balancing manager in the target graphics processing cluster includes: obtaining a fourth workload of each of the fourth parallel processing units in the target graphics processing cluster by a target fourth balancing manager in the target graphics processing cluster; assigning the current work task to a target fourth parallel processing unit based on the fourth workload by the target fourth balancing manager; and obtaining the third workload based on a target third balancing manager in the target fourth parallel processing unit.

In one embodiment, the target processing core includes a plurality of registers, and the target processing core executes an assigned work task based on the registers; the first workload, the second workload, the third workload, and the fourth workload include the number of registers to which work tasks are assigned, respectively; the method further includes:
after the registers of the target processing core of the minimum-level parallel processing unit complete the execution of the assigned work task, causing the minimum-level parallel processing unit to feed back, to a target superior second balancing manager, a first number of registers that have completed the work task; causing the target superior second balancing manager to receive the first number of registers fed back from all the minimum-level parallel processing units and count them as a second register number; causing the target superior second balancing manager to update the second workload based on the second register number; causing the target superior second balancing manager to feed back the second register number to a target superior third balancing manager; causing the target superior third balancing manager to receive the second register numbers from all the target superior second balancing managers and count them as a third register number; causing the target superior third balancing manager to update the third workload based on the third register number; causing the target superior third balancing manager to feed back the third register number to a target superior fourth balancing manager; causing the target superior fourth balancing manager to receive the third register numbers from all the target superior third balancing managers and count them as a fourth register number; causing the target superior fourth balancing manager to update the fourth workload based on the fourth register number; causing the fourth balancing manager to feed back the fourth register number to the first balancing manager; and causing the first balancing manager to update the first workload based on the fourth register numbers fed back from all the fourth balancing managers.

In one embodiment, the step of assigning the current work task to a target graphics processing cluster based on the first workload by the first balancing manager includes: determining, by the target first balancing manager, a graphics processing cluster with the lowest load based on the first workload of each of the graphics processing clusters, and assigning the current work task to the graphics processing cluster with the lowest load. And, the step of reassigning the current work task to a target minimum-level parallel processing unit based on the second workload by the target second balancing manager includes: determining, by the target second balancing manager, a minimum-level parallel processing unit with the lowest load based on the second workload of each of the minimum-level parallel processing units in the graphics processing cluster where it is located, and assigning the current work task to the minimum-level parallel processing unit with the lowest load.

In one embodiment, after the reception of the current work task, the method further includes: predicting, based on the current work task and preset work task execution logic, a derived work task to be generated based on the current work task; determining a graphics processing cluster with the lowest load based on the first workload; pre-assigning the graphics processing cluster with the lowest load for execution of the derived work task; and updating the first workload based on the result of the pre-assignment of the derived work task.

In one embodiment, after the reception of the current work task, the method further includes: predicting, based on the current work task and preset work task execution logic, a derived work task to be generated based on the current work task; calculating a target resource quantity required for execution of the derived work task; determining a target graphics processing cluster with the largest quantity of remaining resources based on the first workload of each of the graphics processing clusters; and pre-assigning the target graphics processing cluster for execution of the derived work task and updating the target graphics processing cluster and updating the first workload.

In one embodiment, the current work task includes a plurality of subtasks, and the target resource quantity includes the number of registers required for execution of the derived work task, or the number of subtasks of the derived work task.

The load balancing method for a graphics processing unit may be implemented with reference to the structures and power consumption of the previously described graphics processing units and will not be described in further detail herein.

Based on the same inventive conception, an embodiment of the present invention further provides an electronic device, which includes a graphics processing unit according to any of the foregoing embodiments.

In an embodiment of the present invention, the electronic device may be a computer, a server, a mobile phone, or the like, which is not limited herein.

The electronic device may further include general modules required therein, such as a memory, a communication module, and the like, which are not introduced individually in the embodiments of the present invention.

The above description is only illustrative of the specific embodiments of the present invention, but the scope of protection of the present invention is not limited thereto, and any modifications or substitutions that can be readily envisaged by those skilled in the art within the scope of the technologies disclosed in the present invention shall be encompassed by the scope of protection of the present invention. Therefore, the scope of protection of the present invention shall be defined by the scope of protection of the claims.

It should be noted that the term "comprising", "including", or any other variant thereof herein is intended to cover non-exclusive inclusion, so that a process, method, article, or device that includes a series of elements includes not only those elements, but also includes other elements that are not expressly listed, or also includes elements that are inherent to such process, method, article, or device. In the absence of further restrictions, an element defined by the wording "comprising a ..." does not preclude the existence of additional identical elements in a process, method, article, or device including the element.

## Claims

1. A graphics processing unit, **characterized by** comprising:
a plurality of graphics processing clusters, each graphics processing cluster comprising a plurality of minimum-level parallel processing units, the minimum-level parallel processing unit comprising a plurality of target processing cores, the target processing cores comprising at least one of shading processing cores and computational processing cores, and each of the target processing cores being configured to execute a work task assigned thereto; and
a first balancing manager, configured to record a first workload of each of the graphics processing clusters, and assign, in a case where a current work task is received, the current work task to each of the graphics processing clusters based on the first workload of each of the graphics processing clusters,
wherein each of the graphics processing clusters comprises a second balancing manager, and the second balancing manager is configured to record a second workload of each of the plurality of minimum-level parallel processing units in the graphics processing cluster where the second balancing manager is located, and receive the current work task and reassign the current work task to each of the minimum-level parallel processing units based on the second workload of each of the minimum-level parallel processing units, so that a target processing core of each of the minimum-level parallel processing units executes the current work task.

2. The graphics processing unit according to claim 1, wherein the graphics processing cluster comprises a third parallel processing unit; and the third parallel processing unit comprises at least two minimum-level parallel processing units;
each of the graphics processing clusters comprises a plurality of second balancing managers, each of the second balancing managers is arranged in a respective third parallel processing unit, and the second balancing manager is configured to record the second workload of each of the plurality of minimum-level parallel processing units in the third parallel processing unit where the second balancing manager is located; and
each of the graphics processing clusters further comprises a third balancing manager; and the third balancing manager is configured to record a third workload of each of the plurality of third parallel processing units in the graphics processing cluster where the third balancing manager is located, and receive the current work task and reassign the current work task to each of the third parallel processing units based on the third workload of each of the third parallel processing units.

3. The graphics processing unit according to claim 2, wherein the graphics processing cluster comprises a plurality of fourth parallel processing units; and each of the fourth parallel processing units comprises at least two third parallel processing units;
each of the graphics processing clusters comprises a plurality of third balancing managers, and each of the third balancing managers is arranged in respective fourth parallel processing unit; and each of the graphics processing clusters further comprises a fourth balancing manager; and the fourth balancing manager is configured to record a fourth workload of each of the plurality of fourth parallel processing units in the graphics processing cluster where the fourth balancing manager is located, and receive the current work task and reassign the work task to each of the third parallel processing units based on the fourth workload of each of the fourth parallel processing units.

4. The graphics processing unit according to claim 3, wherein the target processing core comprises a plurality of registers, and the target processing core executes an assigned work task based on the registers; the first workload, the second workload, the third workload, and the fourth workload comprise a quantity of registers to which the work tasks are assigned, respectively, wherein
for any of the minimum-level parallel processing units, after the registers of the target processing core of this minimum-level parallel processing unit complete execution of the assigned work task, this minimum-level parallel processing unit feeds back, to the second balancing manager, a first register quantity for which the work task is completed;
for each of the third parallel processing units, the second balancing manager of this parallel processing unit receives the first register quantities fed back from all the minimum-level parallel processing units in this parallel processing unit and counts them as a second register quantity, updates the second workload based on the second register quantity, and feeds back the second register quantity to the third balancing manager of the fourth parallel processing unit where this third parallel processing unit is located;
for any of the fourth parallel processing units, the third balancing manager of this fourth parallel processing unit receives the second register quantities fed back from all the third parallel processing units in this fourth parallel processing unit and counts them as a third register quantity, updates the third workload based on the third register quantity, and feeds back the third register quantity to the fourth balancing manager of the graphics processing cluster where this fourth parallel processing unit is located;
for any of the graphics processing clusters, the fourth balancing manager in this graphics processing cluster receives the third register quantities fed back from all the fourth parallel processing units in this graphics processing cluster and counts them as a fourth register quantity, updates the fourth workload based on the fourth register quantity, and feeds back the fourth register quantity to the first balancing manager; and
the first balancing manager is configured to update the first workload based on the fourth register quantities fed back from all the graphics processing clusters.

5. The graphics processing unit according to claim 1, wherein the first balancing manager is configured to: determine a graphics processing cluster with a lowest load based on the first workload of each of the graphics processing clusters, and assign the current work task to the graphics processing cluster with the lowest load; and
the second balancing manager is configured to: determine a minimum-level parallel processing unit with a lowest load based on the second workload of each of the minimum-level parallel processing units in the graphics processing cluster where the second balancing manager is located, and assign the current work task to the minimum-level parallel processing unit with the lowest load.

6. The graphics processing unit according to claim 1, wherein the first balancing manager is further configured to:
predict, based on the current work task and a preset work task execution logic, a derived work task to be generated based on the current work task;
determine a graphics processing cluster with a lowest load based on the first workload;
pre-assign the graphics processing cluster with the lowest load for execution of the derived work task; and
update the first workload based on a pre-assignment result of the derived work task.

7. The graphics processing unit according to claim 1, wherein the first balancing manager is further configured to:
predict, based on the current work task and a preset work task execution logic, a derived work task to be generated based on the current work task;
calculate a target resource amount required for execution of the derived work task;
determine a target graphics processing cluster with a largest remaining resource amount based on the first workload of each of the graphics processing clusters; and
pre-assign the target graphics processing cluster for execution of the derived work task and update the target graphics processing cluster and update the first workload.

8. The graphics processing unit according to claim 7, wherein the current work task comprises a plurality of subtasks, and the target resource amount comprises a register quantity required for execution of the derived work task, or a subtask quantity of the derived work task.

9. A load balancing method for a graphics processing unit, **characterized by** applied to a graphics processing unit, the graphics processing unit comprising a first balancing manager and a plurality of graphics processing clusters, each of the graphics processing clusters comprising a plurality of minimum-level parallel processing units, the minimum-level parallel processing unit comprising a plurality of target processing cores, and the target processing cores comprising at least one of shading processing cores and computational processing cores, wherein the load balancing method comprises steps of:
receiving a current work task;
obtaining a first workload of each of the graphics processing clusters by the first balancing manager;
assigning the current work task to a target graphics processing cluster based on the first workload by the first balancing manager;
obtaining a second workload of each of the plurality of minimum-level parallel processing units in the target graphics processing cluster by a target second balancing manager of the target graphics processing cluster, in a case where the target graphics processing cluster receives the current work task; and
reassigning the current work task to a target minimum-level parallel processing unit based on the second workload by the target second balancing manager, so that a target processing core of the target minimum-level parallel processing unit executes the current work task.

10. The method according to claim 9, wherein the graphics processing cluster comprises a third parallel processing unit; the third parallel processing unit comprises at least two minimum-level parallel processing units; each of the graphics processing clusters comprises a plurality of second balancing managers, each of the second balancing managers is arranged in respective third parallel processing units, and the second balancing manager is configured to record the second workload of each of the plurality of minimum-level parallel processing units in the third parallel processing unit where the second balancing manager is located; and
each of the graphics processing clusters further comprises a third balancing manager; and the third balancing manager is configured to record a third workload of each of the plurality of third parallel processing units in the graphics processing cluster where the third balancing manager is located, wherein
the step of obtaining a second workload of each of the plurality of minimum-level parallel processing units in the target graphics processing cluster by a target second balancing manager of the target graphics processing cluster comprises steps of:
obtaining a third workload of each of the third parallel processing units in the target graphics processing cluster by a target third balancing manager in the target graphics processing cluster;
assigning the current work task to a target third parallel processing unit based on the third workload by the target third balancing manager; and
obtaining the second workload of each of the plurality of minimum-level parallel processing units in the target graphics processing cluster based on the target second balancing manager in the target third parallel processing unit.

11. The method according to claim 10, wherein the graphics processing cluster comprises a plurality of fourth parallel processing units;
each of the fourth parallel processing units comprises at least two third parallel processing units; each of the graphics processing clusters comprises a plurality of third balancing managers, and each of the third balancing managers is arranged in respective fourth parallel processing unit; and each of the graphics processing clusters further comprises a fourth balancing manager; and the fourth balancing manager is configured to record a fourth workload of each of the plurality of fourth parallel processing units in the graphics processing cluster where the fourth balancing manager is located, wherein
the step of obtaining a third workload of each of the third parallel processing units in the target graphics processing cluster by a target third balancing manager in the target graphics processing cluster comprises steps of:
obtaining a fourth workload of each of the fourth parallel processing units in the target graphics processing cluster by a target fourth balancing manager in the target graphics processing cluster;
assigning the current work task to a target fourth parallel processing unit based on the fourth workload by the target fourth balancing manager; and
obtaining the third workload based on a target third balancing manager in the target fourth parallel processing unit.

12. The method according to claim 11, wherein the target processing core comprises a plurality of registers, and the target processing core executes an assigned work task based on the registers; and the first workload, the second workload, the third workload, and the fourth workload comprise a quantity of registers to which the work tasks are assigned, respectively, wherein the method further comprises:
after the registers of the target processing core of any of the minimum-level parallel processing units complete execution of the assigned work task, the minimum-level parallel processing unit feeding back, to a target superior second balancing manager, a first register quantity for which the work task is completed;
the target superior second balancing manager receiving the first register quantities fed back from all the minimum-level parallel processing units and counting them as a second register quantity; the target superior second balancing manager updating the second workload based on the second register quantity; and the target superior second balancing manager feeding back the second register quantity to a target superior third balancing manager;
the target superior third balancing manager receiving the second register quantities from all the target superior second balancing managers and counting them as a third register quantity; the target superior third balancing manager updating the third workload based on the third register quantity; and the target superior third balancing manager feeding back the third register quantity to a target superior fourth balancing manager;
the target superior fourth balancing manager receiving the third register quantities from all the target superior third balancing managers and counting them as a fourth register quantity; the target superior fourth balancing manager updating the fourth workload based on the fourth register quantity; and the fourth balancing manager feeding back the fourth register quantity to the first balancing manager; and
the first balancing manager updating the first workload based on the fourth register quantities fed back from all the fourth balancing managers.

13. The method according to claim 9, wherein the step of assigning the current work task to a target graphics processing cluster based on the first workload by the first balancing manager comprises:
the target first balancing manager determining a graphics processing cluster with a lowest load based on the first workload of each of the graphics processing clusters; and assigning the current work task to the graphics processing cluster with the lowest load; and
the step of reassigning the current work task to a target minimum-level parallel processing unit based on the second workload by the target second balancing manager comprises:
the target second balancing manager determining a minimum-level parallel processing unit with a lowest load based on the second workload of each of the minimum-level parallel processing units in the graphics processing cluster where the target second balancing manager is located, and assigning the current work task to the minimum-level parallel processing unit with the lowest load.

14. The method according to claim 9, wherein after reception of the current work task, the method further comprises:
the first balancing manager predicting, based on the current work task and a preset work task execution logic, a derived work task to be generated based on the current work task;
determining a graphics processing cluster with the lowest load based on the first workload;
pre-assigning the graphics processing cluster with the lowest load for execution of the derived work task; and updating the first workload according to a pre-assignment result of the derived work task.

15. The method according to claim 9, wherein after reception of the current work task, the method further comprises:
the first balancing manager predicting, based on the current work task and a preset work task execution logic, a derived work task to be generated based on the current work task;
calculating a target resource amount required for execution of the derived work task;
determining a target graphics processing cluster with the largest remaining resource amount based on the first workload of each of the graphics processing clusters; and pre-assigning the target graphics processing cluster for execution of the derived work task and updating the target graphics processing cluster and updating the first workload.

16. The method according to claim 15, wherein the current work task comprises a plurality of subtasks, and the target resource amount comprises a register quantity required for execution of the derived work task, or a subtask quantity of the derived work task.

17. An electronic device, **characterized by** comprising a graphics processing unit according to any one of claims 1 to 8.
